# EUROPÄISCHE PATENTSCHRIFT

(11) **EP 3 181 397 B1**
(45) Veröffentlichungstag und Bekanntmachung des Hinweises auf die Patenterteilung: **15.05.2019**
(21) Anmeldenummer: 16200164.8
(22) Anmeldetag: 23.11.2016
(51) Int. Cl.: B60N 2/39, B60N 2/50, B60N 2/02, B60N 2/52

(54) **FAHRZEUGSCHWINGUNGSVORRICHTUNG**
VEHICLE VIBRATION DEVICE
DISPOSITIF DE VIBRATION DE VÉHICULE

(30) Priorität: 14.12.2015 DE 102015121765
(43) Veröffentlichungstag der Anmeldung: 21.06.2017
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- WO-A1-2007/058572
- WO-A1-2009/054788
- US-A- 3 882 956

## Beschreibung

Die Erfindung betrifft einen Fahrzeugsitz oder eine Fahrzeugkabine mit einer Fahrzeugschwingungsvorrichtung mit einem Unterteil und einem gegenüber dem Unterteil mittels einer Dämpfereinrichtung federnd gelagertem Oberteil, wobei das Oberteil an dem Unterteil mittels mindestens einer Schwenklagerung hängend gelagert ist, wobei die mindesten eine erste Schwenklagerung mindesten einen ersten Hebel umfass, dessen erstes Ende mittels einer ersten Schwenkachse am Unterteil und dessen zweites Ende mittels einer zweiten Schwenkachse am Oberteil angebracht ist, wobei das zweite Ende in einer Höhenrichtung gesehen unterhalb des ersten Endes liegt.

Bei einem Betrieb eines Fahrzeuges kann aufgrund von äußeren Einflüssen das Fahrzeug verschiedene Bewegungen erfahren. Diese sind im Allgemeinen Translationen entlang der Fahrzeuglängsrichtung, Fahrzeugbreitenrichtung und Fahrzeughöhenrichtung sowie Drehungen um jeweils diese Richtungen, auch bekannt als Nicken, Rollen und Gieren, wobei das Gieren im Allgemeinen nicht berücksichtigt wird.

Aus dem Stand der Technik bekannte Fahrzeugschwingungsvorrichtungen, insbesondere für Fahrzeugsitze sind derart ausgebildet, dass sie eine schwingende und federnde Lagerung zwischen einem Oberteil und einem Unterteil, in diesem Fall zwischen einem Fahrzeugsitzteil und einem Unterteil eines Fahrzeugsitzunterbaus, darstellen. Beispielsweise kann ein Fahrzeugsitz mit einem Sitzteil gegenüber einem Unterteil, welches an einem Fahrzeugkabinenboden oder einer Karosserie des Fahrzeuges befestigt ist, mittels Scherenarme verbunden sein, wobei zwischen dem Oberteil und dem Unterteil zusätzlich Federungseinrichtungen und/oder Dämpfereinrichtungen angeordnet sind, um eine in vertikaler Richtung ausgerichtete Schwingung, die von außen in das System des Fahrzeugsitzes eingeleitet wird, federnd abzufangen.

Ebenso gibt es horizontale Schwingungsvorrichtungen, die dazu dienen, Schwingungen, die in horizontaler Richtung in das System des Fahrzeugsitzes eingeleitet werden, abzufedern bzw. abzudämpfen. Hierfür ist das Oberteil des Fahrzeugsitzes gegenüber dem Unterteil des Fahrzeugsitzes in horizontaler Richtung federnd gelagert und kann in horizontaler bzw. transversaler Richtung eingeleitete Schwingungen federnd abfangen.

Weiter ist eine Schwingungsvorrichtung für einen Fahrzeugsitz oder eine Fahrzeugkabine aus der DE 10 2010 034 857 bekannt. Die dort beschriebene Schwingungsvorrichtung umfasst ein Oberteil, welche gegenüber einem Unterteil schwingend gelagert ist und Hebel aufweist, die eine bestimmte Lage zwischen dem Oberteil und dem Unterteil einnehmen. Das Oberteil wird dabei gegenüber dem Unterteil um einen fiktiven Drehpunkt, welcher unterhalb des Oberteils angeordnet ist, geschwenkt.

Da sich der Drehpunkt hierbei nicht seine Position verändern kann, ist die Vorrichtung lediglich dazu geeignet, kurzzeitige Rotationen eines Fahrzeugs, insbesondere Nicken und Rollen, gut abzufedern, aber keine Translationen des Fahrzeugs. Weiter ist diese Anordnung nicht dazu geeignet, eine Hanglage des Fahrzeuges sinnvoll auszugleichen.

WO 2007/058572 A1 zeigt einen Fahrzeugsitz, welcher dem Oberbegriff des vorliegenden Anspruches 1 entspricht; es ist hingegen keine Verstellmöglichkeit zwischen den verschiedenen Aufhängungen zu entnehmen.

Es ist demzufolge Aufgabe der vorliegenden Erfindung, einen Fahrzeugsitz oder eine Fahrzeugkabine mit einer Fahrzeugschwingungsvorrichtung bereitzustellen, mittels welcher kurzzeitig auftretende Rotationen des Fahrzeugs, Translationen des Fahrzeugs und Hanglagenfahrten des Fahrzeuges ausgleichbar sind.

Diese Aufgabe wird gemäß den Merkmalen des Patentanspruches 1 und des Patentanspruches 12 gelöst. Vorteilhafte Ausgestaltungen der Erfindung finden sich in den abhängigen Patentansprüchen.

Kerngedanke der Erfindung ist es, einen Fahrzeugsitz oder eine Fahrzeugkabine mit einer Fahrzeugschwingungsvorrichtung mit einem Unterteil und einem gegenüber dem Unterteil mittels einer Dämpfereinrichtung federnd gelagertem Oberteil, wobei das Oberteil an dem Unterteil mittels mindestens einer Schwenklagerung hängend gelagert ist, wobei die mindestens eine erste Schwenklagerung mindestens einen ersten Hebel umfasst, dessen erstes Ende mittels einer ersten Schwenkachse am Unterteil und dessen zweites Ende mittels einer zweiten Schwenkachse am Oberteil angebracht ist, wobei mittels einer Verstelleinrichtung mindestens eine Abmessung des Unterteils veränderbar ist, um die Lage des ersten Hebels zu verändern.

Mittels der hängenden Lagerung des Oberteils gegenüber dem Unterteil mittels mindestens eines ersten Hebels wird eine Drehung um eine fiktive oder reelle Achse, welche in Fahrzeugbreitenrichtung oder in Fahrzeuglängsrichtung verlaufend angeordnet ist, erreicht. Vorzugsweise handelt es sich bei der Achse um eine fiktive Achse.

Erfindungsgemäß kann daher durch Veränderung der Lage bzw. der Position des ersten Hebels aufgrund einer Änderung mindestens einer Abmessung des Unterteils und/oder des Oberteils durch die Verstelleinrichtung die Lage der fiktiven oder reellen Achse verändert werden, vorzugsweise in Fahrzeughöhenrichtung. Durch die Veränderung der Achse kann also ein Drehfeld beschrieben werden, das die Gesamtheit aller Lagen der Achse beschreibt.

Unter einer Lage des ersten Hebels ist eine Lage des ersten Hebels im Raum zu verstehen. Die Lage des ersten Hebels kann dabei mittels von Translationen oder Rotationen verändert werden.

Unter dem Begriff "Abmessung" wird vorliegend bevorzugt eine Länge oder Breite verstanden. Zur genaueren Definition des Begriffes Abmessung umfasst die Schwenklagerung in einer Richtung, also vorzugsweise in Längsrichtung bzw. Breitenrichtung, mindestens zwei voneinander verschiedene Lagerpunkte, mittels welcher das Oberteil gegenüber dem Unterteil hängend gelagert ist. Unter dem Begriff Abmessung wird der Abstand zwischen diesen zwei Lagerpunkten verstanden.

Gemäß einer Ausführungsform ist die mindestens eine Abmessung zumindest eines ausgewählt aus Länge und Breite. Vorzugsweise wird unter Länge eine Erstreckung in Längsrichtung und unter Breite eine Erstreckung in Breitenrichtung verstanden.

Beim Überfahren einer Bodenunebenheit wird beispielsweise das Vorderrad des Fahrzeugs nach oben oder nach unten ausgelenkt, woraus eine Drehbewegung um eine Aufstandsfläche eines Hinterreifens resultieren kann. Die Massenträgheit des Fahrers bewegt den Fahrzeugsitz und entsprechend den Fahrer selber jedoch translatorisch weiter. Durch die hängende Lagerung mittels der Schwenkeinrichtung wird ein rotatorischer Freiheitsgrad bereitgestellt, so dass dem Fahrer die Rotation des Fahrzeuges beim Überfahren einer Bodenunebenheit nicht aufgezwungen wird.

Gemäß einer besonders bevorzugten Ausführungsform umfasst dabei die erste Schwenklagerung mindestens einen zweiten Hebel, dessen erstes Ende mittels einer ersten Schwenkachse am Unterteil und dessen zweites Ende mittels einer zweiten Schwenkachse am Oberteil angeordnet ist, wobei das zweite Ende in der Höhenrichtung gesehen unterhalb des ersten Endes liegt.

Hierdurch kann eine besonders vorteilhafte hängende Lagerung des Oberteils gegenüber dem Unterteil realisiert werden.

Besonders bevorzugt ist die erste Schwenklagerung achsensymmetrisch bezüglich einer Mittelachse des Unterteils ausgebildet, wodurch eine besonders vorteilhaft Verschwenkung des Oberteils gegenüber dem Unterteil möglich ist. Insbesondere ist der Versatz dabei in jede Richtung im Wesentlichen gleich, insbesondere in horizontaler Richtung.

Dies ist insbesondere dahingehend vorteilhaft, da aufgrund des Bauraumes und aus sicherheitstechnischen Gründen der Versatz in horizontaler Richtung auf etwa 50 mm Gesamthub beschränkt ist, was einen linksseitigen und rechtsseitigen bzw. vorderseitigen und rückseitigen Versatz von 25 mm entspricht.

Gemäß einer weiteren bevorzugten Ausführungsform umfasst die Fahrzeugschwingungsvorrichtung mindestens eine zweite Schwenklagerung. Dabei sind vorteilhaft das Unterteil und das Oberteil mittels der mindestens einen ersten und mindestens einen zweiten Schwenklagerung miteinander verbindbar.

Hierbei umfasst vorteilhaft die erste Schwenklagerung ebenso wie die zweite Schwenklagerung jeweils mindestens einen Hebel, dessen erstes Ende mittels einer ersten Schwenkachse am Unterteil und dessen zweites Ende mittels einer zweiten Schwenkachse am Oberteil schwenkbar angebracht ist, wobei das zweite Ende oberhalb des ersten Endes liegt. Dies bedeutet, dass das Oberteil nach unten oder schräg nach unten weisenden Hebelarmen hängend an dem Unterteil aufgehängt ist, welches sich beispielsweise seitlich links und rechtsseitig von dem Oberteil nach oben erstreckt oder seitlich im vorderen und hinteren Bereich des Oberteils sich nach oben erstreckt.

Dadurch, dass erfindungsgemäß die Lage bzw. die Position des ersten Hebels mittels einer Veränderung einer Abmessung des Oberteils und/oder des Unterteils in seiner Lage veränderbar ist, ist es also folglich auch möglich, die Lage der fiktiven oder reellen Achse zu verändern. Durch Änderung der Abmessung des Oberteils und/oder des Unterteils wird die Lage des gesamten ersten Hebels im Raum verändert, das heißt die Art der Schwenklagerung ist hierdurch ebenso veränderbar. Prinzipiell sind dabei drei grundsätzlich verschiedene Stellungen des ersten Hebels möglich.

Es ist natürlich auch denkbar, dass die Lage des zweiten Hebels durch die Verstelleinrichtung veränderbar ist, auf gleiche oder ähnliche Weise wie die Lageveränderung des ersten Hebels.

Die erste Stellung ist, dass der Hebel in der Fahrzeughöhenrichtung ausgerichtet ist. Die zweite Stellung ist, dass der Hebel ausgehend von seinem ersten Ende schräg nach unten und nach innen angeordnet ist. Die dritte Stellung ist, dass der Hebel ausgehend von seinem ersten Ende schräg nach unten und schräg nach außen angeordnet ist.

Mittels der Verstelleinrichtung und insbesondere durch Betätigung der Verstelleinrichtung ist es daher möglich, zwischen diesen drei Stellungen zu wechseln. Vorzugsweise handelt es sich hierbei um eine stufenlose Verstellung, so dass jede denkbare Position zwischen den verschiedenen Stellungen denkbar ist. Das erste Ende des ersten Hebels ist daher stetig und ohne Unterbrechung mittels der Verstelleinrichtung bewegbar.

Gemäß einer bevorzugten Ausführungsform ist die Verstelleinrichtung an dem Oberteil oder dem Unterteil anordenbar. Dies resultiert in einem besonders einfachen Aufbau der Verstelleinrichtung und entsprechend der Fahrzeugschwingungsvorrichtung, da nur eine Abmessung oder Abmessungen entweder des Unterteils oder des Oberteils durchgeführt werden. Wird also beispielsweise die Länge des Unterteiles verändert, so wird das Oberteil nicht verändert.

Gemäß einer anderen bevorzugten Ausführungsform sind jedoch zwei Verstelleinrichtungen vorgesehen. Dabei ist jeweils eine Verstelleinrichtung an dem Unterteil und dem Oberteil anordenbar. Dies bedeutet also, dass sowohl die Abmessung bzw. Abmessungen des Unterteils und des Oberteils veränderbar sind. Hierdurch ist es durchaus möglich, die Lage des ersten Hebels durch eine Veränderung der Abmessungen des Oberteils und des Unterteils zu verändern. Hierdurch ist es möglich, die Lage des ersten Hebels und bevorzugt auch des zweiten Hebels zu verändern.

Dabei sind verschiedene Ausführungen für die Verstelleinrichtung denkbar. Gemäß einer bevorzugten ersten Ausführungsform umfasst die Verstelleinrichtung mindestens ein Vergrößerungselement, wobei der erste Hebel mit seinem ersten und/oder zweiten Ende daran befestigbar ist. Ist das Vergrößerungselement nur mit der Oberseite verbunden, so ist der erste Hebel mit seinem zweiten Ende mit dem Vergrößerungselement verbunden. Ist das Vergrößerungselement nur mit der Unterseite verbunden, so ist der erste Hebel mit seinem ersten Ende mit dem Vergrößerungselement verbindbar.

Unter einem Vergrößerungselement ist dabei ein Element der Verstelleinrichtung zu verstehen, welches aufgrund einer Betätigung der Verstelleinrichtung seine Lage im Raum ändert, vorzugsweise entlang einer vorgebbaren Verlagerungskurve. Dadurch, dass der erste Hebel und gegebenenfalls auch der zweite Hebel mit dem Vergrößerungselement verbindbar sind, wird bei Betätigen der Verstelleinrichtung, was einhergeht mit einer Lageänderung des Vergrößerungselements, die Lage des ersten und gegebenenfalls des zweiten Hebels verändert.

Gemäß einer besonders bevorzugten Ausführungsform weist die Verstelleinrichtung mindestens zwei Vergrößerungselemente auf. Weiter vorteilhaft sind die Vergrößerungselemente in einer Raumrichtung gegenüberliegend angeordnet, wobei der erste Hebel mit seinem ersten oder zweiten Ende an dem ersten Vergrößerungselement und der zweite Hebel mit seinem ersten oder zweiten Ende an dem zweiten Vergrößerungselement anordenbar.

Vorzugsweise können das erste und zweite Vergrößerungselement an der Unterseite oder der Oberseite angeordnet werden. Es ist aber auch denkbar, dass das erste Vergrößerungselement an der Oberseite und das zweite Vergrößerungselement an der Unterseite anordenbar ist, wobei der erste Hebel mit seinem ersten Ende mit dem zweiten Vergrößerungselement und mit seinem zweiten Ende an dem ersten Vergrößerungselement verbindbar ist.

Gemäß einer weiteren bevorzugten Ausführungsform ist bei einer Betätigung der Verstelleinrichtung das zumindest eine Vergrößerungselement in einer Raumrichtung verlagerbar. Eine Raumrichtung ist dabei die Längsrichtung oder die Breitenrichtung. Je nach Ausführung der Verstelleinrichtung ist es auch denkbar, dass ein kleiner Anteil auch in Höhenrichtung verlagerbar ist.

Dies bedeutet, dass durch eine Schwenkung des Hebelelements des Unterteils die Lage des ersten Endes des Hebels veränderbar ist.

Gemäß einer besonders bevorzugten Ausführungsform weist die Verstelleinrichtung mindestens ein an dem Unterteil angeordnetes Kurbelelement mit einem ersten und einem zweiten Ende auf, wobei zumindest an dem ersten Ende des Kurbelelements ein erstes Ende eines ersten Vergrößerungselements schwenkbar angeordnet ist und ein zweites Ende der ersten Pleuelstange schwenkbar mit dem ersten Hebel verbindbar ist. Vorzugsweise ist das Kurbelelement um eine Drehachse drehbar gelagert. Besonders vorteilhaft weist die erste Pleuelstange einen Führungsstift auf, welcher mit einer Führungskulisse verbindbar ist. Bei einer Betätigung der Verstelleinrichtung wird der Führungsstift in der Führungskulisse verlagert und dadurch die Pleuelstange entsprechend verschoben. Insbesondere ist die Führungskulisse derart ausgestaltet, dass der Führungsstift linear verschiebbar ist. Es sind jedoch auch andere Ausgestaltungen der Führungskulisse denkbar.

Durch Betätigen des Kurbelelements und der daraus resultierenden Bewegung der Pleuelstange ist es also möglich, das erste Vergrößerungselement in seiner Lage zu verändern und somit die Lage des ersten Hebels im Raum zu verändern.

Gemäß einer bevorzugteren Ausführungsform ist an dem zweiten Ende des Kurbelelements ein erstes Ende eines zweiten Vergrößerungselements anordenbar und die zweite Pleuelstange mittels eines zweiten Endes des Vergrößerungselements mit mindestens einem zweiten Hebel verbunden. Vorzugsweise umfasst auch das zweite Vergrößerungselement einen Führungsstift, welcher in einer entsprechenden Führungskulisse führbar gelagert ist. Vorzugsweise sind die Führungskulissen des ersten und zweiten Vergrößerungselements derart ausgestaltet, dass sich der erste und zweite Hebel gleich bewegt werden können.

Je nach Anordnung der Vergrößerungselemente, also an dem Unterteil und/oder dem Oberteil, ist das Vergrößerungselement entweder mit dem ersten oder dem zweiten Ende des ersten bzw. zweiten Hebels verbindbar.

Eine andere Möglichkeit der Ausgestaltung der Verstelleinrichtung ist, dass die Verstelleinrichtung mindestens ein Stellglied umfasst. Dieses Stellglied ist vorzugsweise mit dem Unterteil oder dem Oberteil verbindbar. Weiter ist das Stellglied bevorzugt mit dem ersten und gegebenenfalls zweiten Vergrößerungselement verbindbar.

Das Stellglied kann hierbei mechanisch, pneumatisch oder hydraulisch ausgebildet sein. Vorzugsweise handelt es sich beim Stellglied um einen hydraulischen Hubzylinder. Auch ist es denkbar, dass das Stellglied als eine Drehspindel oder dergleichen ausgebildet, welche durch eine Betätigung in seiner Längsausdehnung veränderbar ist.

Weiter ist es gemäß einer bevorzugten Ausführungsform denkbar, dass die Verstelleinrichtung manuell oder automatisch betätigbar ist.

Eine manuelle Betätigung der Verstelleinrichtung kann beispielsweise durch den Fahrer durchgeführt werden, der die Verstelleinrichtung dann beispielsweise per Hand betätigt und die Lage bzw. die Position des ersten Endes des ersten Hebels entsprechend der aktuellen Fahrsituation anpassen kann.

Alternativ oder kumulativ ist es denkbar, dass die Verstelleinrichtung automatisch, vorzugsweise mittels einer Betätigungseinrichtung, betätigt wird. So ist es hierbei denkbar, dass mittels von Sensoren, beispielsweise Beschleunigungssensoren und Lagesensoren, ermittelt werden kann, welche Fahrsituation momentan vorliegt. So kann zum Beispiel mittels eines Lagesensors erkannt werden, ob eine Hanglage des Fahrzeuges vorliegt oder nicht. Bei einem Lagesensor kann es sich insbesondere um einen Winkelsensor handeln, so dass vorteilhaft eine längere Hanglagenfahrt gut detektierbar ist. Über einen Beschleunigungssensor kann dabei ermittelt werden, ob eine Bodenunebenheit überfahren wird oder nicht.

Die von den Sensoren aufgenommenen Daten werden vorzugsweise von einer Recheneinheit analysiert und die Recheneinheit steuert entsprechend die Betätigungseinrichtung an, wobei dann mittels der Betätigungseinrichtung die Verstelleinrichtung betätigt wird.

Gemäß einer weiteren Ausführungsform ist es auch denkbar, dass sowohl eine manuelle als auch eine automatische Betätigung denkbar ist. So kann vom Fahrer eine bestimmte Fahrsituation eingestellt, insbesondere voreingestellt, werden, wenn abzusehen ist, welche Anforderungen benötigt werden. Als Beispiel denke man an einen Fahrer, der mit dem Fahrzeug in einem Weinberg fährt. Die bevorzugte Voreinstellung ist hierbei die Hanglageneinstellung. Dennoch ist es mittels der automatischen Betätigung dann möglich, auf unvorhergesehene Bodenunebenheit reagieren zu können. Nach Überfahren einer derartigen Bodenunebenheit kann mittels der Recheneinheit wieder der Hanglagenausgleich angesteuert werden.

Gemäß einer bevorzugten Ausführungsform kann es vorgesehen sein, dass eine Schwenkbewegung des schwenkbaren Oberteils mittels einer Dämpfereinrichtung mit einer der Schwenkbewegung entgegenwirkenden Dämpfungskraft beaufschlagbar ist, wobei die Dämpfereinrichtung mit dem ersten Hebel verbindbar ist. Alternativ kann die Dämpfereinrichtung zwischen dem Oberteil und dem Unterteil angeordnet sein.

Durch diese Anordnung ist es möglich, die Schwenkbewegung des Oberteils gegenüber dem Unterteil besonders gut zu reduzieren.

Gemäß einer weiteren bevorzugten Ausführungsform ist das Unterteil mit einem Fahrzeugkarosserieteil oder -rahmen und/oder mit einem Fahrzeugkabinenteil verbundenem Fahrzeugsitzunterteil.

Abhängig davon, welche Kinematik vorliegt, ergibt sich für die jeweilige Kinematik eine andere fiktive Achse, um welche das Unterteil gedreht wird. Für die Kinematik der rotativen Isolation befindet sich die Achse unterhalb des Unterteils, für die Kinematik des Hanglagenausgleiches befindet sich die Achse oberhalb des Unterteils. Die Kinematik für die translatorische Isolation ist ein Spezialfall, da sich die Achse hierbei im Unendlichen befindet. Sie kann daher oberhalb oder unterhalb des Unterteils angeordnet sein.

Die zugrunde liegende Situation für die rotative Isolation und den Hanglagenausgleich ist insofern die gleiche, dass das Fahrzeug eine Rotation erfährt, einerseits durch ein Überfahren einer Bodenunebenheit oder andererseits durch das Überfahren einer Hanglage.

Es ist jedoch für einen Fahrer ein grundlegender Unterschied festzustellen. Bei der rotativen Isolation ist der Fahrer normalerweise in einer horizontalen Lage sitzend auf dem Fahrzeugsitz, so dass er kurzzeitige, auch teilweise starke Auslenkungen in Kauf nimmt. Bei dem Hanglagenausgleich ist das Nutzfahrzeug über einen längeren Zeitraum hinweg gegenüber der Horizontalen verkippt, so dass hierdurch der Fahrer keine große Auslenkung gegenüber seiner ursprünglichen Position wünscht.

Insbesondere ist es möglich, den Hanglagenausgleich derart einzustellen, dass sich die fiktive Achse im Bereich des Oberkörpers des Fahrers befindet, wohingegen bei der rotatischen Isolation die Achse immer fahrzeugseitig und unterhalb des Fahrers angeordnet ist. Durch den Wechsel zwischen Hanglagenausgleich und rotativer Isolation ändert sich daher das Bezugssystem von Fahrzeug und Fahrer. Hierdurch ist es möglich, die beste Kinematik für den Fahrer entsprechend seiner Fahrsituation einzustellen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: Nutzfahrzeug mit den verschiedenen Bewegungsmöglichkeiten;
- Fig. 2A: schematische Darstellung der translatorischen Isolation;
- Fig. 2B: schematische Darstellung der rotativen Isolation;
- Fig. 2C: schematische Darstellung des Hanglagenausgleichs;
- Fig. 3: schematische Darstellung des Verstellbereiches;
- Fig. 4A-4C: Kinematik bei Veränderung einer Abmessung A;
- Fig. 5A-5C: Kinematik bei einer Veränderung einer Abmessung B;
- Fig. 6A-6C: Kinematik translatorische Isolation bei verschiedenen Fahrstellungen;
- Fig. 7A-7C: Kinematik rotatorische Isolation bei verschiedenen Fahrstellungen;
- Fig. 8A-8C: Kinematik Hanglagenausgleich bei verschiedenen Fahrstellungen;
- Fig. 9A-9D: Fahrzeugschwingungsvorrichtung gemäß Fig. 8 rotative Isolation.

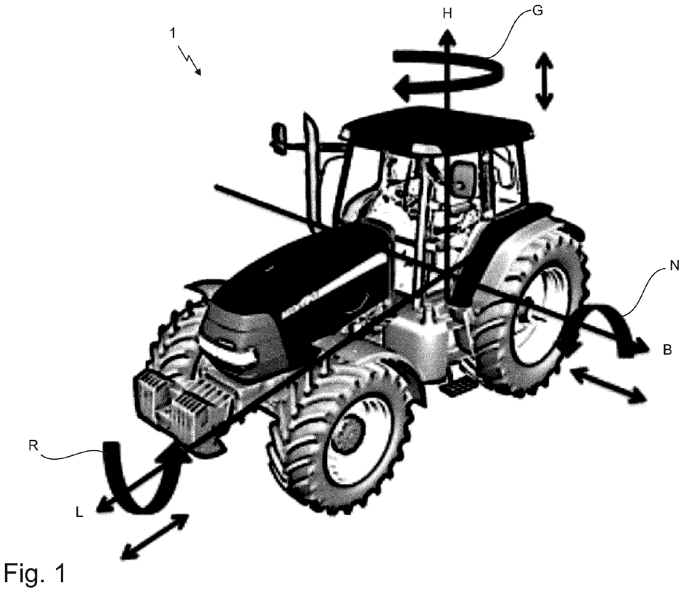

Das in der Figur 1 gezeigte Nutzfahrzeug 1 zeigt die typischen Bewegungen des Nutzfahrzeuges an, abhängig natürlich von der jeweiligen Fahrsituation. Es können hierbei Translationen des Nutzfahrzeugs entlang der Fahrzeuglängsrichtung L, der Fahrzeugbreitenrichtung B und der Fahrzeughöhenrichtung H auftreten. Weiter können jeweils um diese Achsen L, B, H Rotationen auftreten, wobei eine Rotation um die Längsrichtung L als Rollen R, eine Rotation um die Breitenrichtung B als Nicken N und eine Rotation um die Höhenrichtung H als Gieren G bekannt sind. Typischerweise wird Gieren für die Fahrzeuge vernachlässigt.

Erfindungsgemäß ist es möglich, diese Bewegungen, bis auf das vernachlässigbare Gieren, mittels der Fahrzeugschwingungsvorrichtung 2 auszugleichen.

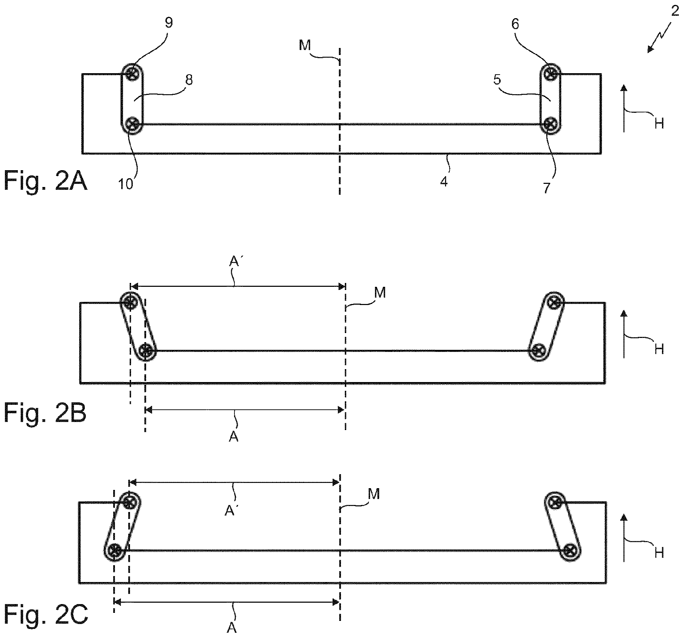

Die drei grundsätzlich verschiedenen Stellungen der Fahrzeugschwingungsvorrichtung 2 sind durch die Figuren 2A, 2B und 2C gezeigt. Die Figuren können hierbei verschiedene Maßstäbe aufweisen. Die Figuren 2A-2C weisen im Vergleich unterschiedliche Abmessungen des Oberteiles 3 auf. Diese Stellungen werden eingenommen, wenn keine Schwingung des Oberteils 3 gegenüber dem Unterteil 4 durchgeführt wird, also keine äußere Störung oder dergleichen auftritt.

In der Figur 2A ist eine erste Stellung, insbesondere des ersten Endes 6 des ersten Hebels 5, gezeigt. Hierbei ist das erste Ende 6 des ersten Hebels 5 in Höhenrichtung H gesehen über dem zweiten Ende 7 des ersten Hebels 5 angeordnet. Zusätzlich ist ein zweiter Hebel 8 zu erkennen, wobei der zweite Hebel 8 mittels seines ersten Endes 9 mit dem Unterteil 4 und mittels seines zweiten Endes 10 mit dem Oberteil 3 verbunden ist. Vorliegend sind also der erste 5 und zweite Hebel 8 zueinander parallel zueinander ausgebildet und verlaufen in Höhenrichtung H. Die hier dargestellte schematische Fahrzeugschwingungsvorrichtung 2 ist achsensymmetrisch zu der Mittelachse M des Unterteils 4. Die ersten 6, 9 und zweiten Enden 7, 10 bilden ein Parallelogramm, bei einer Verschwenkung des Oberteils 3 gegenüber dem Unterteil 4 bleiben das Oberteil 3 und das Unterteil 4 parallel zueinander. Diese Stellung ist insbesondere zur Isolation von Translationen bevorzugt und im Folgenden mit translatorische Isolation 13 bezeichnet.

Die Figur 2B zeigt dabei ähnlich zu der Figur 2A einen ersten 5 und zweiten Hebel 8, wobei der Abstand A der jeweiligen zweiten Enden 7, 10 von der Mittelachse M geringer ist als der Abstand A'. Die zweiten Enden 7, 10 sind also weiter nach innen gerückt. Bei einer Verschwenkung des Oberteils 3 gegenüber dem Unterteil 4 ist das Oberteil 3 nicht mehr parallel zu dem Unterteil 4. Diese Aufhängung beschreibt insbesondere eine Drehung des Oberteils 3 um eine unterhalb des Oberteils 3 angeordneten fiktiven Achse 11. Diese Stellung ist insbesondere zur Isolation von Roll- und Nickbewegungen bevorzugt und im Folgenden mit rotatorischer Isolation 14 bezeichnet.

Die Figur 2C zeigt die gleichen Bauteile wie die Figuren 2A und 2B, jedoch ist der Abstand A der ersten Enden 7, 10 von der Mittelachse M größer als der Abstand A' der zweiten Enden zu der Mittelachse M. Die zweiten Enden 7, 10 sind also weiter nach außen gerückt. Bei einer Verschwenkung des Oberteils 3 gegenüber dem Unterteil 4 ist das Oberteil 3 nicht mehr parallel zu dem Unterteil 4. Diese Aufhängung beschreibt insbesondere eine Drehung des Oberteils 3 um eine oberhalb des Oberteils 3 angeordneten fiktiven Achse 11. Diese Stellung ist insbesondere zur Isolation von Hanglagen und Roll- und Nickbewegungen bevorzugt und im Folgenden mit Hanglagenausgleich 15 bezeichnet.

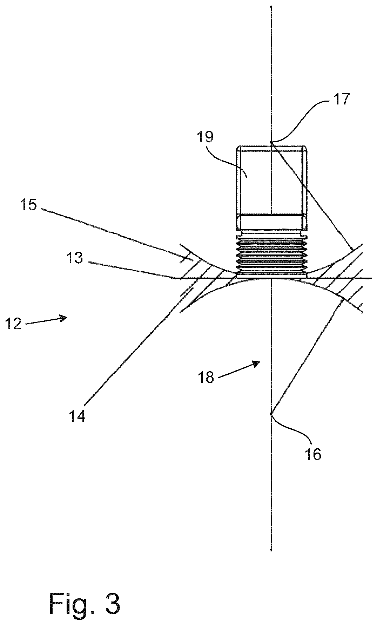

Ein möglicher Verstellbereich 12 und die Position der fiktiven Achse 11 sind besonders gut der Figur 3 zu entnehmen.

Dabei sind beispielhaft eine Drehachse 16 für die rotatorische Isolation und eine Drehachse 17 für den Hanglagenausgleich angegeben. Die Drehachse 16 ist dabei unterhalb des Oberteils 3 und insbesondere unterhalb des Unterteils 4 angeordnet und die Drehachse 17 oberhalb des Oberteils 3 bzw. oberhalb des Unterteils 4.

Wenn die Drehachse 16 sich unterhalb des Oberteils 3 befindet, so wird ein konvexer Fall beschrieben, wobei sich das System bestehend aus der Fahrzeugschwingungsvorrichtung 2 und vorliegend einem Fahrzeugsitz 19 oberhalb eines Kreisbogens. Die Bewegung des Systems entspricht im Wesentlichen dem Kreisbogenverlauf bzw. wird entsprechend der vorliegenden Kinematik angenähert.

Durch die Gerade 13 ist die translatorische Isolation 13 angegeben. Da sich das System bei einer translatorischen Isolation 13 entlang der Geraden 13 bewegt, ist keine Drehachse bzw. kein Drehpunkt vorhanden. Aufgrund von baulichen Toleranzen und Abweichungen kann aber von einer Drehachse ausgegangen werden, welche sich im Unendlichen befindet.

Befindet sich die Drehachse 17 oberhalb des Unterteils 4 und/oder oberhalb des Oberteils 3, handelt es sich um einen konkaven Fall, d.h. das System bewegt sich innerhalb des variablen Kreisbogens.

Durch die Achse 18 wird ein mögliches Drehfeld oder Drehachsenfeld aufgezeigt, d.h. die Drehachse kann jeden Wert des Drehfeldes 18 annehmen, abhängig von der aktuellen oder gewünschten Fahrsituation.

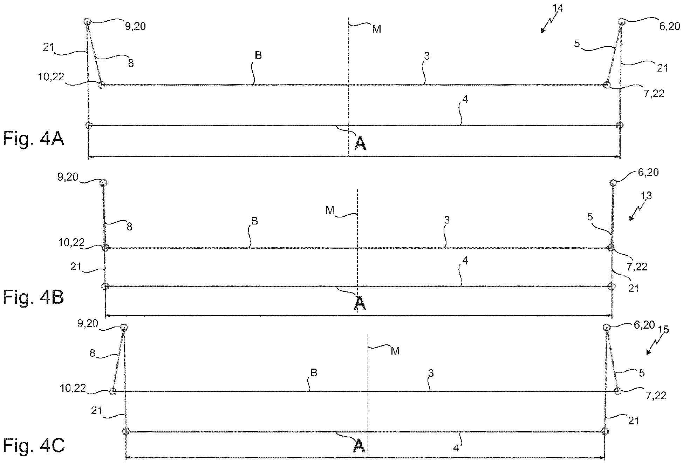

Gemäß den Figuren 4A-4C wird schematisch dargestellt, wie durch die Veränderung der Abmessung A, also der Abmessung des Unterteils 4, zu einer Veränderung der Lage des ersten Hebels 5 führt.

Dabei zeigt die Figur 4A die Fahrzeugschwingungsvorrichtung 1 in der Stellung der rotatorischen Isolation 14, die Figur 4B die Fahrzeugschwingungsvorrichtung 1 in der Stellung der translatorischen Isolation 13 und die Figur 4C die Fahrzeugschwingungsvorrichtung in der Stellung des Hanglagenausgleiches 15.

Zu sehen ist in den Figuren 4A-4C ein Oberteil 3, welche hängend gegenüber dem Unterteil 4 gelagert ist mittels eines ersten 5 und eines zweiten Hebels 8, wobei die zweiten Enden 7, 10 mit dem Oberteil 3 und die ersten Enden 6, 9 mit dem Unterteil 4 verbunden sind. Insbesondere sind die ersten Enden 6, 9 mittels eines Aufhängeelements 21 mit dem Unterteil 4 verbunden. Die Aufhängeelemente 21 sind vorliegend in Höhenrichtung H erstreckend angeordnet, wobei die Aufhängeelemente 21 auch in einem Winkel zur Höhenrichtung H angeordnet sein können.

Dabei weist das Unterteil Lagerpunkte 21 auf, die im Wesentlichen den ersten Enden 6, 9 entsprechen. Eine Abmessung A ist erfindungsgemäß als Abstand zwischen den Lagerpunkten des Unterteils 4 bzw. des Oberteils 3 definiert. Die Abmessung B ist entsprechend zwischen den Lagerpunkten 22, die im Wesentlichen den zweiten Enden 7, 10 entsprechen.

Da die Aufhängeelemente 21 im Wesentlichen senkrecht zu der Unterseite 4 angeordnet sind, ist die Abmessung A gleichbedeutend mit der Länge bzw. Breite der Unterseite 4. Die Abmessung A ist daher zur Übersichtlichkeit entsprechend der Unterseite 4 gezeigt.

In den Figuren 4A-4C ist die Abmessung B der Oberseite 3 konstant anzusehen.

In der Figur 4A ist zu erkennen, dass die Abmessung A größer ist als die Abmessung B. Aufgrund dieser Tatsache sind die Hebel 5, 8 schräg nach unten verlaufen angeordnet, wobei die zweiten Enden 7, 10 näher an einer Mittelachse M des Unterteils 4 angeordnet sind als die ersten Enden 6, 9.

Im Vergleich ist dazu in der Figur 4B die Abmessung A gleich der Abmessung B, das heißt, dass die Lagerpunkte 20, 22 in Höhenrichtung übereinander angeordnet sind.

In der Figur 4C ist dabei die Abmessung A kleiner als die Abmessung B, so dass die zweiten Enden 7, 10 der Hebel 5, 8 weiter von der Mittelachse M des Unterteils 4 beabstandet sind als die ersten Enden 6, 9. Die Hebel verlaufen auch in diesem Fall schräg nach unten.

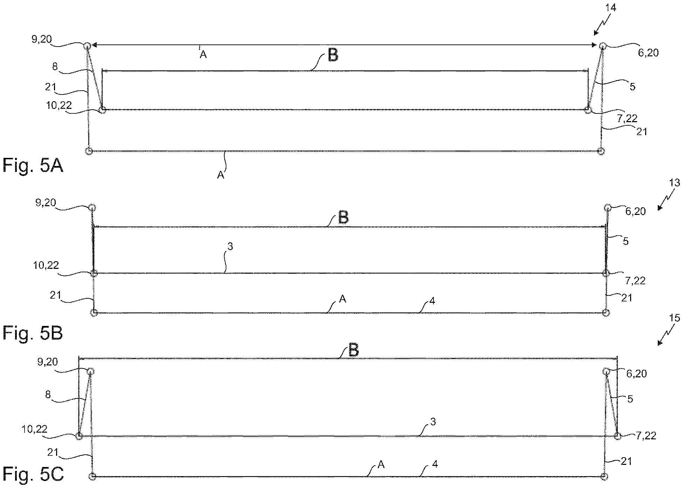

In den Figuren 5A-5C werden die Fahrzeugschwingungsvorrichtung 1 wieder schematisch dargestellt, wobei hierbei die Abmessung B des Oberteils verändert wird, wohingegen die Abmessung A konstant ist.

Die Figur 5A zeigt die Fahrzeugschwingungsvorrichtung 1 in der Stellung der rotatorischen Isolation 14, die Figur 5B die Fahrzeugschwingungsvorrichtung 1 in der Stellung der translatorischen Isolation 13 und die Figur 5C die Fahrzeugschwingungsvorrichtung 1 in der Stellung des Hanglagenausgleichs 15.

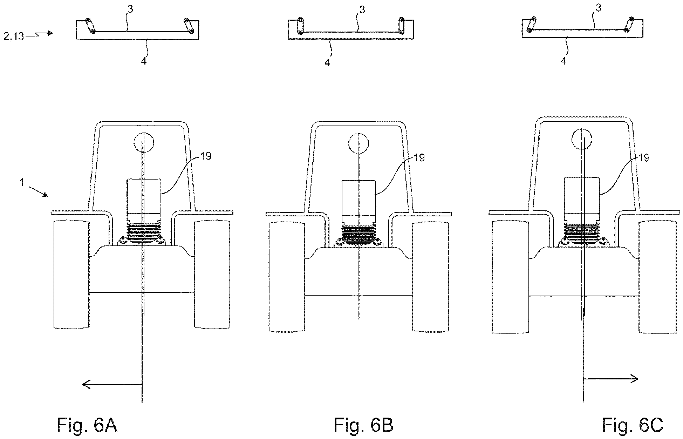

Die Figuren 6A-6C, 7A-7C und 8A-8C zeigen noch einmal die verschiedenen Situationen mit der jeweiligen, dazugehörigen Kinematik der Fahrzeugschwingungsvorrichtung 2. Die Kinematik wird hierbei ohne die Verstelleinrichtung 26 gezeigt.

Die Figuren zeigen das Nutzfahrzeug 1 mit dem Fahrzeugsitz 19, welcher auf dem Oberteil 3 montiert ist und wobei das Unterteil 4 mit der Karosserie des Nutzfahrzeuges 1 verbunden ist.

Die Figuren 6A-6C zeigen dabei die Situation der translatorischen Isolation 13, das heißt das Nutzfahrzeug 1 erfährt eine Translation, beispielsweise durch den Einsatz eines Anhängers (hier nicht gezeigt). Die Kinematik der Fahrzeugschwingungsvorrichtung 2 ist jeweils darüber aufgezeigt. Die Figur 6B zeigt dabei das Nutzfahrzeug 1 ohne äußeren Einfluss, es wirkt also keine Kraft auf das Fahrzeug 1 ein. Die Figur 6A zeigt dabei eine Translation nach links durch eine Krafteinwirkung auf das Fahrzeug 1 von rechts. Entsprechend zeigt die Figur 6C eine Translation nach rechts aufgrund einer Krafteinwirkung von links. Aus einem Vergleich der Kinematiken ist insbesondere erkennbar, dass das Oberteil 3 immer parallel zu dem Unterteil 4 ausgerichtet ist.

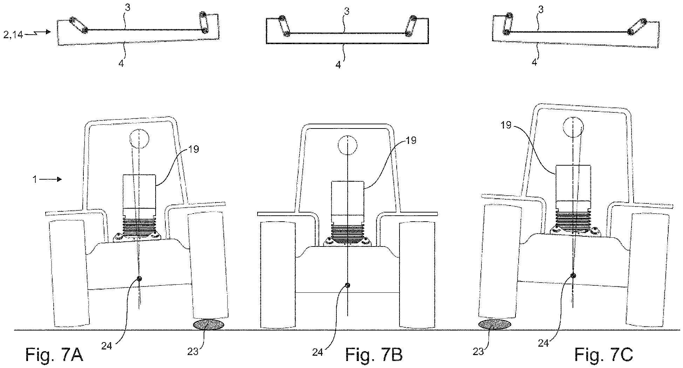

Die Figuren 7A-7C zeigen die Situation der rotatorischen Isolation 14, das heißt das Nutzfahrzeug 1 erfährt eine Rotation durch das Überfahren einer Bodenunebenheit 23. Ebenso ist die Kinematik der Fahrzeugschwingungsvorrichtung jeweils darüber aufgezeigt. Die Figur 7B zeigt dabei das Nutzfahrzeug ohne äußeren Einfluss, es wirkt also keine Kraft auf das Fahrzeug 1 ein. Die Figur 7A zeigt das Nutzfahrzeug 1 bei einem Überfahren der Bodenunebenheit 23, so dass das Fahrzeug 1 eine Rotation entgegen des Uhrzeigersinns erfährt. Durch die zugrunde liegende Kinematik erfährt der Fahrzeugsitz 19 dabei eine Rotation um eine fiktive Achse, die unterhalb der Fahrzeugschwingungsvorrichtung 2 und insbesondere unterhalb des Unterteils 4 angeordnet ist. Erfährt das Fahrzeug 1 eine Rotation im Uhrzeigersinn, so wie in der Figur 7C dargestellt, so erfährt der Fahrzeugsitz 19 eine Rotation gegen den Uhrzeigersinn.

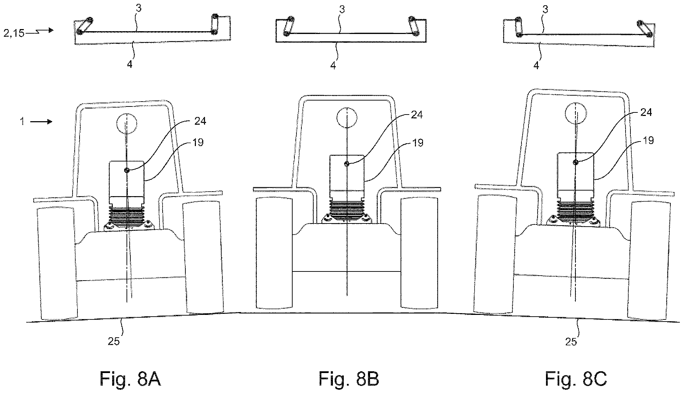

Die Figuren 8A-8C zeigen die Situation des Hanglagenausgleichs 15, das heißt das Fahrzeug 1 fährt entlang einer Hanglage 25. Die Figur 8B zeigt dabei die Situation, wenn das Fahrzeug keinen Hang befährt. In der Figur 8B ist hingegen die Situation dargestellt, bei dem das Fahrzeug 1 einen nach links abfallenden Hang 25 befährt. Der Fahrzeugsitz 19 erfährt dabei aufgrund der ihm zugrunde liegenden Kinematik der Fahrzeugschwingungsvorrichtung 2 eine Rotation um eine Achse 19 im Uhrzeigersinn, wobei die Achse 19 oberhalb der Fahrzeugschwingungsvorrichtung 2 und insbesondere oberhalb des Unterteils 4 angeordnet ist. Durch diese Anordnung verlagert sich das Bezugssystem auf den Körper des Fahrers, so dass der Fahrer bei einer Hanglage keine oder nur eine geringe Auslenkung von der üblichen Sitzposition erfährt. Ähnliches gilt für einen nach rechts abfallenden Hang 25, wie in der Figur 8C dargestellt. Der Fahrzeugsitz 19 erfährt dabei eine geringe Rotation entgegen den Uhrzeigersinn um die Achse 24.

In den folgenden Figuren werden verschiedene Ausführungsbeispiele dafür gegeben, wie mittels einer Verstelleinrichtung 26 die Abmessung A bzw. die Abmessung B verändert werden kann. Die Ausführungsformen sind lediglich schematisch dargestellt, so dass einige Elemente übertrieben groß dargestellt sein können.

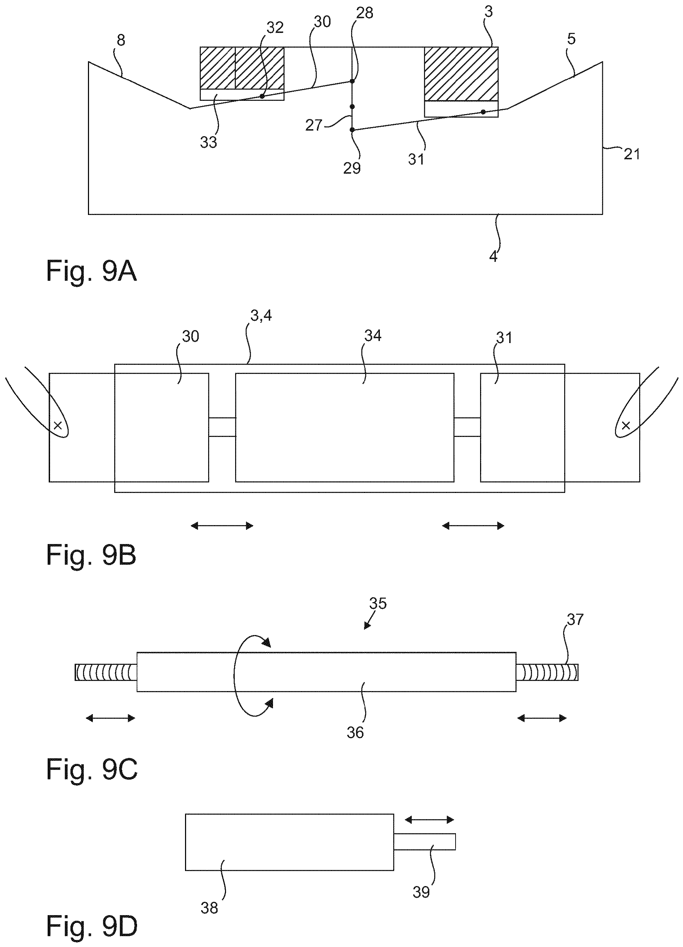

In der Figur 9A ist eine erste Ausführungsform der Verstelleinrichtung 26. Die Verstelleinrichtung ist unterhalb des Oberteils 3 angeordnet und umfasst ein Kurbelelement 27 mit einem ersten 28 und zweiten Ende 29, wobei an dem ersten Ende 28 ein erstes Vergrößerungselement 30 und an dem zweiten Ende 29 ein zweites Vergrößerungselement 31 schwenkbar angeordnet sind. Weiter sind die Vergrößerungselement 30, 31 schwenkbar mit dem ersten 5 bzw. zweiten Hebel 8 verbunden. Bei einer Betätigung der Verstelleinrichtung, was einer Drehung des Kurbelelements 27 bedeutet, werden ebenso die Vergrößerungselemente 30, 31 betätigt. Vorzugsweise umfassen die Vergrößerungselemente 30, 31 einen Führungsstift 32, der mit einer Führungskulisse 33 in Kontakt steht. Mittels der Führungskulisse 33 können die Vergrößerungselemente 30, 31 geführt verlagert werden. Da die Vergrößerungselemente 30, 31 mit den Hebeln 5, 8 schwenkbar verbunden sind, kann entsprechend eine Abmessung des Oberteils 3 verändert werden.

Eine andere Ausführungsform ist gemäß der Figur 9B gezeigt. Wie zu erkennen ist, sind hierbei die Vergrößerungselemente 30, 31 innerhalb des Oberteils 3 angeordnet und mit einer Betätigungselement 34 verbunden. Durch Betätigen des Betätigungselements, können die Vergrößerungselemente 30, 31 entsprechend den gezeigten Pfeilen verlagert werden. An den äußeren Enden können die Hebel 5, 8, wie gezeigt, befestigt sein oder die Aufhängeelemente 21 des Unterteils 4.

Die Figur 9C zeigt eine erste Ausführungsform des Betätigungselements 34. Das Betätigungselement 34 ist hierbei als eine Drehspindel 35 ausgebildet sein, wobei die Drehspindel 35 eine Umhausung 36 aufweist, mittels welcher Gewindestangen 37 durch Rotation der Umhausung 36 bewegt werden können, vorliegend entlang der gezeigten Pfeile.

Die Figur 9D zeigt dabei eine zweite Ausführungsform des Betätigungselements 34. Hierbei ist das Betätigungselement 34 als ein Hubzylinder 38 mit einer Kolbenstange 39 ausgebildet.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Nutzfahrzeug
- 2: Fahrzeugschwingungsvorrichtung
- 3: Oberteil
- 4: Unterteil
- 5: erster Hebel
- 6: erstes Ende erster Hebel
- 7: zweites Ende erster Hebel
- 8: zweiter Hebel
- 9: erstes Ende zweiter Hebel
- 10: zweites Ende zweiter Hebel
- 11: Achse
- 12: Verstellbereich
- 13: translatorische Isolation
- 14: rotatorische Isolation
- 15: Hanglagenausgleich
- 16: Drehachse rotatorische Isolation
- 17: Drehachse Hanglagenausgleich
- 18: Drehfeld
- 19: Fahrzeugsitz
- 20: Lagerpunkt
- 21: Aufhängeelement
- 22: Lagerpunkt
- 23: Bodenunebenheit
- 24: Achse
- 25: Hanglage
- 26: Verstelleinrichtung
- 27: Kurbelelement
- 28: erstes Ende Kurbelelement
- 29: zweites Ende Kurbelelement
- 30: erstes Vergrößerungselement
- 31: zweites Vergrößerungselement
- 32: Führungsstift
- 33: Führungskulisse
- 34: Betätigungselement
- 35: Drehspindel
- 36: Umhausung
- 37: Gewindestange
- 38: Hubzylinder
- 39: Kolbenstange
- B: Breitenrichtung
- L: Längsrichtung
- H: Höhenrichtung

## Patentansprüche

1. Fahrzeugsitz mit einer Fahrzeugschwingungsvorrichtung (2) mit einem Unterteil (4) und einem gegenüber dem Unterteil (4) mittels einer Dämpfereinrichtung federnd gelagertem Oberteil (3), wobei das Oberteil (3) an dem Unterteil (4) mittels mindestens einer ersten Schwenklagerung hängend gelagert ist, wobei die mindestens eine erste Schwenklagerung mindestens einen ersten Hebel (5) umfasst, dessen erstes Ende (6) mittels einer ersten Schwenkachse am Unterteil (4) und dessen zweites Ende (7) mittels einer zweiten Schwenkachse am Oberteil (3) angebracht ist, wobei das zweite Ende (7) in einer Höhenrichtung (H) gesehen unterhalb des ersten Endes (6) liegt,
**dadurch gekennzeichnet, dass**
mittels einer Verstelleinrichtung (26) mindestens eine Abmessung des Unterteils (4) veränderbar ist, um die Lage des ersten Hebels zu (5) verändern.

2. Fahrzeugsitz mit einer Fahrzeugschwingungsvorrichtung (2) nach Anspruch 1,
**dadurch gekennzeichnet, dass**
die erste Schwenklagerung mindestens einen zweiten Hebel (8) umfasst, dessen erstes Ende (9) mittels einer ersten Schwenkachse am Unterteil (4) und dessen zweites Ende (10) mittels einer zweiten Schwenkachse am Oberteil (3) angeordnet ist, wobei das zweite Ende (10) in der Höhenrichtung (H) gesehen unterhalb des ersten Endes (9) liegt.

3. Fahrzeugsitz mit einer Fahrzeugschwingungsvorrichtung (2) nach Anspruch 1 oder 2,
**dadurch gekennzeichnet, dass**
die Fahrzeugschwingungsvorrichtung (2) mindestens eine zweite Schwenklagerung aufweist und das Unterteil (4) und das Oberteil (3) mittels der mindestens einen ersten und mindestens einen zweiten Schwenklagerung miteinander verbindbar sind.

4. Fahrzeugsitz mit einer Fahrzeugschwingungsvorrichtung (2) nach einem der vorhergehenden Ansprüche,
**dadurch gekennzeichnet, dass**
die mindestens eine Abmessung mindestens eines ist ausgewählt aus Länge und Breite.

5. Fahrzeugsitz mit einer Fahrzeugschwingungseinrichtung (2) nach einem der vorangegangenen Ansprüche,
**dadurch gekennzeichnet, dass**
die Verstelleinrichtung (26) an dem Oberteil (3) oder dem Unterteil (4) anordenbar ist.

6. Fahrzeugsitz mit einer Fahrzeugschwingungsvorrichtung (2) nach einem der Ansprüche 1 bis 4,
**dadurch gekennzeichnet, dass**
zwei Verstelleinrichtungen (26) vorgesehen sind, wobei jeweils eine Verstelleinrichtung (26) an dem Unterteil (4) und dem Oberteil (3) anordenbar ist.

7. Fahrzeugsitz mit einer Fahrzeugschwingungsvorrichtung (2) nach einem der vorangegangenen Ansprüche,
**dadurch gekennzeichnet, dass**
die Verstelleinrichtung (26) mindestens ein Vergrößerungselement (30, 31) aufweist, wobei der erste Hebel (5) mit seinem ersten (6) oder zweiten Ende (7) daran befestigbar ist.

8. Fahrzeugsitz mit einer Fahrzeugschwingungsvorrichtung (2) nach Anspruch 7,
**dadurch gekennzeichnet, dass**
die Verstelleinrichtung (26) mindestens zwei Vergrößerungselemente (30, 31) aufweist, wobei die zwei Vergrößerungselemente (30, 31) in einer Raumrichtung gegenüberliegend anordenbar sind und an dem ersten Vergrößerungselement (30) der erste Hebel (5) mit seinem ersten (6) oder zweiten Ende (7) und an dem zweiten Vergrößerungselement (31) der zweite Hebel (8) mit seinem ersten (9) oder zweiten Ende (10) anordenbar ist.

9. Fahrzeugsitz mit einer Fahrzeugschwingungsvorrichtung (2) nach einem der Ansprüche 7 oder 8,
**dadurch gekennzeichnet, dass**
bei einer Betätigung der Verstelleinrichtung (26) das Vergrößerungselement (30, 31) in einer Raumrichtung verlagerbar ist.

10. Fahrzeugsitz mit einer Fahrzeugschwingungsvorrichtung (2) nach einem der Ansprüche 7 bis 9,
**dadurch gekennzeichnet, dass**
das Vergrößerungselement (30, 31) mittels einer Drehspindel (35) und/oder einem pneumatischen oder hydraulischen Zylinder (38) betätigbar ist, wobei das Vergrößerungselement (30, 31) mittels einer Gleitlagerung und/oder einer Rollenlagerung verlagerbar ist.

11. Fahrzeugsitz mit einer Fahrzeugschwingungsvorrichtung (2) nach einem der vorangegangenen Ansprüche,
**dadurch gekennzeichnet, dass**
mittels der Verstelleinrichtung (26) mindestens eine Abmessung des Oberteils (3) und mindestens die Abmessung des Unterteils (4) veränderbar ist, um die Lage des ersten Hebels (5) zu verändern.

12. Fahrzeugkabine mit einer Fahrzeugschwingungsvorrichtung (2) mit einem Unterteil (4) und einem gegenüber dem Unterteil (4) mittels einer Dämpfereinrichtung federnd gelagertem Oberteil (3), wobei das Oberteil (3) an dem Unterteil (4) mittels mindestens einer ersten Schwenklagerung hängend gelagert ist, wobei die mindestens eine erste Schwenklagerung mindestens einen ersten Hebel (5) umfasst, dessen erstes Ende (6) mittels einer ersten Schwenkachse am Unterteil (4) und dessen zweites Ende (7) mittels einer zweiten Schwenkachse am Oberteil (3) angebracht ist, wobei das zweite Ende (7) in einer Höhenrichtung (H) gesehen unterhalb des ersten Endes (6) liegt,
**dadurch gekennzeichnet, dass**
mittels einer Verstelleinrichtung (26) mindestens eine Abmessung des Unterteils (4) veränderbar ist, um die Lage des ersten Hebels zu (5) verändern.

## Claims

1. Vehicle seat comprising a vehicle vibration device (2) comprising a lower part (4) and an upper part (3) mounted resiliently with respect to the lower part (4) by means of a damping device, the upper part (3) being mounted suspended on the lower part (4) by means of at least one first pivot bearing, the at least one first pivot bearing comprising at least one first lever (5), the first end (6) of which is attached to the lower part (4) by means of a first pivot axis and the second end (7) of which is attached to the upper part (3) by means of a second pivot axis, the second end (7) being positioned below the first end (6) when viewed in a vertical direction (H),
**characterised in that**
at least one dimension of the lower part (4) can be varied by means of an adjustment device (26) in order to vary the position of the first lever (5).

2. Vehicle seat comprising a vehicle vibration device (2) according to claim 1,
**characterised in that**
the first pivot bearing comprises at least one second lever (8), the first end (9) of which is arranged on the lower part (4) by means of a first pivot axis and the second end (10) of which is arranged on the upper part (3) by means of a second pivot axis, the second end (10) being positioned below the first end (9) when viewed in the vertical direction (H).

3. Vehicle seat comprising a vehicle vibration device (2) according to either claim 1 or claim 2,
**characterised in that**
the vehicle vibration device (2) comprises at least one second pivot bearing and the lower part (4) and the upper part (3) can be interconnected by means of the at least one first and at least one second pivot bearing.

4. Vehicle seat comprising a vehicle vibration device (2) according to any of the preceding claims,
**characterised in that**
the at least one dimension is at least one selected from length and width.

5. Vehicle seat comprising a vehicle vibration device (2) according to any of the preceding claims,
**characterised in that**
the adjustment device (26) can be arranged on the upper part (3) or the lower part (4).

6. Vehicle seat comprising a vehicle vibration device (2) according to any of claims 1 to 4,
**characterised in that**
two adjustment devices (26) are provided, it being possible to arrange an adjustment device (26) on each of the lower part (4) and the upper part (3).

7. Vehicle seat comprising a vehicle vibration device (2) according to any of the preceding claims,
**characterised in that**
the adjustment device (26) comprises at least one extension element (30, 31), it being possible to fix the first end (6) or second end (7) of the first lever (5) to said element.

8. Vehicle seat comprising a vehicle vibration device (2) according to claim 7,
**characterised in that**
the adjustment device (26) comprises at least two extension elements (30, 31), it being possible to arrange the two extension elements (30, 31) so as to be opposite in a spatial direction and it being possible to arrange the first end (6) or second end (7) of the first lever (5) on the first extension element (30) and to arrange the first end (9) or second end (10) of the second lever (8) on the second extension element (31).

9. Vehicle seat comprising a vehicle vibration device (2) according to either claim 7 or claim 8,
**characterised in that**
the extension element (30, 31) can be displaced in a spatial direction when the adjustment device (26) is actuated.

10. Vehicle seat comprising a vehicle vibration device (2) according to any of claims 7 to 9,
**characterised in that**
the extension element (30, 31) can be actuated by means of a rotary spindle (35) and/or a pneumatic or hydraulic cylinder (38), it being possible to displace the extension element (30, 31) by means of a sliding bearing and/or a roller bearing.

11. Vehicle seat comprising a vehicle vibration device (2) according to any of the preceding claims,
**characterised in that**
at least one dimension of the upper part (3) and at least the dimension of the lower part (4) can be varied by means of the adjustment device (26) in order to vary the position of the first lever (5).

12. Vehicle cabin comprising a vehicle vibration device (2) comprising a lower part (4) and an upper part (3) mounted resiliently with respect to the lower part (4) by means of a damping device, the upper part (3) being mounted suspended on the lower part (4) by means of at least one first pivot bearing, the at least one first pivot bearing comprising at least one first lever (5), the first end (6) of which is attached to the lower part (4) by means of a first pivot axis and the second end (7) of which is attached to the upper part (3) by means of a second pivot axis, the second end (7) being positioned below the first end (6) when viewed in a vertical direction (H),
**characterised in that**
at least one dimension of the lower part (4) can be varied by means of an adjustment device (26) in order to vary the position of the first lever (5).

## Revendications

1. Siège de véhicule ayant un dispositif (2) de vibration de véhicule ayant une partie inférieure (4) et une partie supérieure (3) qui est montée de manière élastique par rapport à la partie inférieure (4) au moyen d'un dispositif amortisseur, la partie supérieure (3) étant montée de manière suspendue sur la partie inférieure (4) au moyen d'au moins un premier palier pivotant, ledit au moins un premier palier pivotant comportant au moins un premier levier (5) dont la première extrémité (6) est attachée à la partie inférieure (4) au moyen d'un premier axe de pivotement et dont la seconde extrémité (7) est attachée à la partie supérieure (3) au moyen d'un second axe de pivotement, la seconde extrémité (7) se situant au-dessous de la première extrémité (6) lorsqu'elle est vue dans une direction de la hauteur (H),
**caractérisé par le fait que**
au moins une dimension de la partie inférieure (4) est modifiable au moyen d'un dispositif de réglage (26) pour modifier la position du premier levier (5).

2. Siège de véhicule ayant un dispositif (2) de vibration de véhicule selon la revendication 1,
**caractérisé par le fait que**
le premier palier pivotant comporte au moins un second levier (8) dont la première extrémité (9) est disposée sur la partie inférieure (4) au moyen d'un premier axe de pivotement et dont la seconde extrémité (10) est disposée sur la partie supérieure (3) au moyen d'un second axe de pivotement, la seconde extrémité (10) se trouvant au-dessous de la première extrémité (9) lorsqu'elle est vue dans la direction de la hauteur (H).

3. Siège de véhicule ayant un dispositif (2) de vibration de véhicule selon l'une des revendications 1 ou 2,
**caractérisé par le fait que**
le dispositif (2) de vibration de véhicule présente au moins un second palier pivotant et la partie inférieure (4) et la partie supérieure (3) sont aptes à être reliées l'une à l'autre au moyen dudit au moins un premier palier pivotant et dudit au moins un second palier pivotant.

4. Siège de véhicule ayant un dispositif (2) de vibration de véhicule selon l'une des revendications précédentes,
**caractérisé par le fait que**
ladite au moins une dimension est au moins l'une choisie parmi la longueur et la largeur.

5. Siège de véhicule ayant un dispositif (2) de vibration de véhicule selon l'une des revendications précédentes,
**caractérisé par le fait que**
le dispositif de réglage (26) est apte à être disposé sur la partie supérieure (3) ou sur la partie inférieure (4).

6. Siège de véhicule ayant un dispositif (2) de vibration de véhicule selon l'une des revendications 1 à 4,
**caractérisé par le fait que**
deux dispositifs de réglage (26) sont prévus, les dispositifs de réglage (26) étant aptes à être disposés respectivement sur la partie inférieure (4) et sur la partie supérieure (3).

7. Siège de véhicule ayant un dispositif (2) de vibration de véhicule selon l'une des revendications précédentes,
**caractérisé par le fait que**
le dispositif de réglage (26) présente au moins un élément d'extension (30, 31), le premier levier (5) étant apte à être fixé sur celui-ci par sa première (6) ou seconde extrémité (7).

8. Siège de véhicule ayant un dispositif (2) de vibration de véhicule selon la revendication 7,
**caractérisé par le fait que**
le dispositif de réglage (26) présente au moins deux éléments d'extension (30, 31), les deux éléments d'extension (30, 31) étant aptes à être disposés en regard l'un de l'autre dans une direction spatiale et le premier levier (5) étant apte à être disposé sur le premier élément d'extension (30) par sa première (6) ou seconde extrémité (7) et le second levier (8) étant apte à être disposé sur le second élément d'extension (31) par sa première (9) ou seconde extrémité (10).

9. Siège de véhicule ayant un dispositif (2) de vibration de véhicule selon l'une des revendications 7 ou 8,
**caractérisé par le fait que**
lors d'un actionnement du dispositif de réglage (26), l'élément d'extension (30, 31) est déplaçable dans une direction spatiale.

10. Siège de véhicule ayant un dispositif (2) de vibration de véhicule selon l'une des revendications 7 à 9,
**caractérisé par le fait que**
l'élément d'extension (30, 31) est actionnable au moyen d'une broche rotative (35) et/ou d'un vérin pneumatique ou hydraulique (38), l'élément d'extension (30, 31) étant déplaçable au moyen d'un palier lisse et/ou d'un roulement à rouleaux.

11. Siège de véhicule ayant un dispositif (2) de vibration de véhicule selon l'une des revendications précédentes,
**caractérisé par le fait que**
au moins une dimension de la partie supérieure (3) et au moins la dimension de la partie inférieure (4) sont modifiables au moyen du dispositif de réglage (26), pour modifier la position du premier levier (5).

12. Cabine de véhicule ayant un dispositif (2) de vibration de véhicule ayant une partie inférieure (4) et une partie supérieure (3) montée de manière élastique par rapport à la partie inférieure (4) au moyen d'un dispositif amortisseur, la partie supérieure (3) étant montée d'une manière suspendue sur la partie inférieure (4) au moyen d'au moins un premier palier pivotant, ledit au moins un premier palier pivotant comportant au moins un premier levier (5) dont la première extrémité (6) est attachée à la partie inférieure (4) au moyen d'un premier axe de pivotement et dont la seconde extrémité (7) est attachée à la partie supérieure (3) au moyen d'un second axe de pivotement, la seconde extrémité (7) se situant au-dessous de la première extrémité (6) lorsqu'elle est vue dans une direction de la hauteur (H),
**caractérisée par le fait que**
au moins une dimension de la partie inférieure (4) est modifiable au moyen d'un dispositif de réglage (26) pour modifier la position du premier levier (5).
